# EUROPÄISCHE PATENTSCHRIFT

(11) **EP 3 349 943 B1**
(45) Veröffentlichungstag und Bekanntmachung des Hinweises auf die Patenterteilung: **09.06.2021**
(21) Anmeldenummer: 16784781.3
(22) Anmeldetag: 12.09.2016
(51) Int. Cl.: B25B 23/14, B25F 5/00, B25B 23/145, B25B 23/147

(54) **WERKZEUGSYSTEM MIT KRAFTSCHRAUBER UND EXTERNEM BEDIENTEIL**
TOOL SYSTEM WITH POWER WRENCH AND EXTERNAL OPERATING PART
SYSTÈME D'OUTILLAGE POURVU D'UNE VISSEUSE ET D'UN ÉLÉMENT DE COMMANDE EXTERNE

(30) Priorität: 14.09.2015 DE 102015115469
(43) Veröffentlichungstag der Anmeldung: 25.07.2018
(73) Patentinhaber: Hohmann, Frank, 59581 Warstein (DE); Hohmann, Jörg, 59872 Meschede (DE)
(72) Erfinder: Hohmann, Frank, 59581 Warstein (DE); Hohmann, Jörg, 59872 Meschede (DE)
(74) Vertreter: Christophersen & Partner Partnerschaft mbB Patentanwälte
(86) Internationale Anmeldenummer: PCT/DE2016/100424
(87) Internationale Veröffentlichungsnummer: WO 2017/045668

(56) Entgegenhaltungen:
- DE-A1-102012 202 116
- DE-A1-102014 209 032
- DE-U1-202010 015 259

## Beschreibung

Die Erfindung betrifft ein Werkzeugsystem zur Vornahme eines elektronisch gesteuerten Anzugsvorgangs einer hochfesten Schraubenverbindung oder zur Vornahme einer Serie derartiger Anzugsvorgänge umfassend
- einen handgeführten, fremdkraftbetriebenen Kraftschrauber mit einer fremdkraftbetriebenen Antriebseinheit und einer elektronischen Kraftschrauber-Steuereinrichtung zur Steuerung des Anzugsvorgangs nach vorgegebenen, den Schraubfall charakterisierenden Konfigurationsdaten, und
- ein vom Kraftschrauber unabhängiges, handgehaltenes externes Bedienteil mit einer Eingabeeinheit zur Eingabe zumindest der Konfigurationsdaten sowie mit einem Display zur visuellen Darstellung der Konfigurationsdaten und/oder sonstigen den Schraubfall oder einen Anzugsvorgang betreffenden Informationen und/oder Messwerten gegenüber dem Benutzer,
wobei der Kraftschrauber und das Bedienteil über eine Datenverbindung miteinander zu kommunizieren vermögen und wobei zusätzlich zu dem am externen Bedienteil vorgesehenen Display am Kraftschrauber ein Hilfsdisplay vorgesehen ist, welches dem Benutzer den Schraubfall oder einen konkreten Anzugsvorgang betreffende Informationen unabhängig vom Display des externen Bedienteils anzuzeigen vermag.

Werkzeugsysteme zum Anziehen hochfester Schraubenverbindungen mit einem Kraftschrauber (Anzugsdrehmomente in Bereichen von etwa 150 Nm bis etwa 15.000 Nm) und einem externen Bedienteil, das mit dem Kraftschrauber über eine drahtlose oder kabelgebundene Datenverbindung kommuniziert, sind aus der von der Anmelderin selbst stammenden Offenlegungsschrift EP 0 946 336 A1 bekannt.

Die DE 10 2012 202116 A1 schlägt ein System mit einem Einsatzwerkzeug und einer Handwerkzeugmaschine in Form einer Bohrmaschine vor, die eine Recheneinheit und eine Werkzeugidentifikationseinheit aufweist, die dazu vorgesehen ist, zumindest eine Kenngröße des Einsatzwerkzeugs zu erfassen. Insbesondere ist die Recheneinheit dazu ausgebildet, die Kenngröße zu verarbeiten. Unter einem Einsatzwerkzeug soll insbesondere eine Einheit verstanden werden, die bei einem Arbeitsvorgang direkt auf ein Werkstück wirkt.

Vorzugsweise ist die Handwerkzeugmaschine dazu vorgesehen, das Einsatzwerkzeug durch einen Bediener lösbar zu befestigen.

Die EP 3 070 682 A1 schlägt ein Gerät vor, das auf Anzeigemitteln ein graphischer Code angezeigt wird, der mittels vom Gerät getrennter Erfassungsmittel erfassbar ist, und der wenigstens eine für das Gerät spezifische Information enthält. Auf diese Weise können verschiedene, geräteinterne bzw. gerätespezifische Informationen schnell und einfach zur Verfügung gestellt werden, so dass sie, bspw. mittels eines Tablet-Computers oder eines Smartphones, ausgelesen und verwendet werden können.

Die DE 20 2010 015259 U1 schlägt ein Drahtlosübertragungs-Drehmomentschlüssel vor, welcher ein Drehmoment und eine Winkellage oder Orientierung detektiert und zur drahtlosen Übertragung von den gemessenen Daten auf ein entferntes elektronisches Gerät zur anschließenden Verwendung und Verwaltung in der Lage ist.

Kraftschrauber, denen kein externes Bedienteil zugeordnet ist, haben gegenüber den Systemen mit einem externen Bedienteil den Nachteil, dass sämtliche einen Schraubfall betreffenden und in die Steuerung einfließenden Konfigurationsdaten des jeweiligen Schraubfalls am Kraftschrauber eingegeben werden müssen. Hierzu ist am Kraftschrauber selbst eine elektronische Eingabeeinheit mit Bedientasten und Display vorzusehen, die sich in der Praxis jedoch als unvorteilhaft erwiesen hat. Insbesondere in schwierigen Arbeitspositionen oder bei widrigen äußeren Bedingungen erfordert eine sichere und verlässliche Eingabe durch einen Benutzer oft große Mühen. Hierzu trägt außerdem bei, dass eine am Kraftschrauber angeordnete Eingabeeinheit konstruktiv keine Eingabetasten und kein Display in einer Größe erlaubt, die eine hinreichende Benutzerfreundlichkeit gewährleisten könnten. Außerdem ist die teils empfindliche Elektronik und Mechanik einer solchen Eingabeeinheit den starken Beanspruchungen des Kraftschraubers im täglichen Gebrauch nicht in ausreichendem Maß gewachsen.

Eine am Kraftschrauber selbst vorgesehene Eingabeeinheit kann deshalb in ein vom Kraftschrauber unabhängiges, externes Bedienteil mit Eingabetasten und Display verlagert werden, das als handgehaltenes Bedienteil einfacher als der in der Regel schwere und sperrige Kraftschrauber gehalten und bedient werden kann. Hierdurch wird der Kraftschrauber von der teils empfindlichen und filigran zu bedienenden Eingabeelektronik befreit. Etwaige Eingaben zur Programmierung bzw. Konfiguration des Kraftschraubers erfolgen über die Eingabeeinheit des externen Bedienteils, das größere Freiheiten für eine benutzungsfreundliche Dimensionierung von Eingabetasten und Display bietet. Daten werden drahtlos oder über eine Kabelverbindung an den Kraftschrauber übertragen.

Als nachteilig an einer derartigen Lösung hat sich allerdings erwiesen, dass der Benutzer durch die Verlagerung des Displays an ein externes Bedienteil in vielen Fällen, in denen er das externe Bedienteil nicht in seinem Blickfeld positionieren kann, eine visuelle Rückmeldung durch die auf dem Display dargestellten Informationen zu dem aktuell durchzuführenden Schraubfall verliert. Insbesondere während eines konkreten Anzugsvorgangs, bei dem der Benutzer beide Hände zur Bedienung und zum Halten des Kraftschraubers benötigt, fehlt es an einer Möglichkeit, das am externen Bedienteil vorgesehene Display einzusehen, um etwaige Vorgangsdaten des Anzugsvorgangs visuell zu prüfen oder die Einhaltung bestimmter Vorgaben einer Serie von Anzugsvorgängen eines Schraubfalls zu überwachen. Hinzu kommt, dass der Benutzer selbst dann, wenn es gelingt, das externe Bedienteil mit dem Display innerhalb des Blickfeldes zu positionieren, er in der Regel den Blick zumindest vorübergehend von dem Kraftschrauber lösen muss. Weiter ist zu berücksichtigen, dass insbesondere eine permanente drahtlose Datenübertragung fehleranfällig ist und nicht selten unterbrochen wird, was dazu führen kann, dass Dokumentationsvorgänge zu Schraubfällen fehlerhaft oder gar nicht dokumentiert werden und die Überwachung eines Anzugsvorgangs nur lückenhaft möglich ist.

Vor diesem Hintergrund macht es sich die Erfindung zur Aufgabe, ein Werkzeugsystem aus einem Kraftschrauber und einem diesem zugeordneten externen Bedienteil zu schaffen, bei dem der Benutzer trotz der Möglichkeit, den Kraftschrauber über eine an dem externen Bedienteil vorgesehene Eingabeeinheit für einen bestimmten Schraubfall zu konfigurieren, die Möglichkeit behält, während eines Schraubenanzugsvorgangs oder der Durchführung einer Serie von Anzugsvorgängen Informationen zu dem Anzugsvorgang, die Kraftschrauberkonfiguration oder die Einhaltung bestimmter Vorgaben unabhängig von dem Display am externen Bedienteil visuell zu prüfen und zu überwachen.

Erfindungsgemäß wird die Aufgabe dadurch gelöst, dass das Werkzeugsystem derart eingerichtet ist, dass alle Konfigurationsdaten ausschließlich am externen Bedienteil vorgenommen werden können, dass der Kraftschrauber und das externe Bedienteil akkubetrieben sind und das Werkzeugsystem ein Akkuladegerät umfasst, an dem sich neben einem Akku des Kraftschraubers auch das externe Bedienteil aufladen lässt, und dass das Werkzeugsystem eine Freidreh-Steuerung umfasst.
Hierdurch kann der Nutzer, wenn auch in eingeschränkterem Umfang als über das Hauptdisplay am externen Bedienteil, Rückmeldungen zur Konfiguration des Kraftschraubers oder zu den den aktuellen Schraubfall betreffenden Vorgängen erhalten, ohne auf das externe Bedienteil angewiesen zu sein. Gleichwohl behält er wegen des externen Bedienteils die Möglichkeit, den Kraftschrauber auf komfortable Weise zu konfigurieren.

Das Werkzeugsystem ist dabei bevorzugt derart eingerichtet, dass am Kraftschrauber keine Eingabemöglichkeit zur Eingabe von Konfigurationsdaten vorgesehen ist. Eine Steuereinrichtung zur Steuerung eines Anzugsvorgangs und damit die für einen Anzugsvorgang erforderliche "Intelligenz" des Systems befindet sich ausschließlich im Kraftschrauber. Eine derartige Verteilung der Bedienung und der Funktionen auf die beiden voneinander unabhängigen Geräte Kraftschrauber und Bedienteil gewährleistet zum einen eine komfortable und sichere Eingabe der Konfigurationsdaten über das externe Bedienteil und das Freihalten des Kraftschraubers von filigraner Eingabeelektronik und -mechanik, und zum anderen eine autarke und von dem Bestehen der Datenverbindung unabhängige Nutzung des Kraftschraubers während der Abarbeitung eines Schraubfalls durch den Benutzer.

Die am Hilfsdisplay anzeigbaren Informationen können insbesondere Konfigurationsdaten sein, die am externen Bedienteil eingegeben und mittels der Datenverbindung an den Kraftschrauber übertragen worden sind, beispielsweise Konfigurationsdaten zum Zielmoment, dem Zielwinkel oder der Anzugsreihenfolge bei einem eine Serie von Anzugsvorgängen umfassenden Schraubfall. Die am Hilfsdisplay anzeigbaren Informationen können auch aus derartigen Konfigurationsdaten unmittelbar abgeleitete Informationen sein.

So besteht die Möglichkeit, dem Benutzer die Kraftschrauberkonfiguration visuell zu bestätigen oder ihn mittels einer Anzeige auf dem Hilfsdisplay und von der Kraftschrauber-Steuerung unterstützt durch einen komplexeren Schraubfall zu führen, ohne dass der Benutzer wiederholt auf das externe Bedienteil zurückgreifen muss. Neben derartigen Konfigurationsdaten können am Hilfsdisplay jedoch auch etwaige Fehlermeldungen oder Informationen angezeigt werden, anhand der der Benutzer den Fortschritt innerhalb eines einzelnen Anzugsvorgangs, z. B. ein Fortschrittsbalken, oder innerhalb eine Serie von aufeinanderfolgenden Anzugsvorgängen, z. B. Nummer der aktuell anzuziehenden und/oder Nummer der als nächstes anzuziehenden Schraubverbindung, ablesen kann. Wird der Benutzer auf diese Weise vom System unterstützt, ist die Gefahr eines Fehlers minimiert.

Bevorzugt ist am Kraftschrauber eine digitale Speichereinheit vorgesehen, in der die zur Steuerung des Kraftschraubers herangezogenen Konfigurationsdaten abgelegt sind und deren Inhalt mittels des externen Bedienteils ausgelesen, am externen Bedienteil geändert und in die digitale Speichereinheit am Kraftschrauber zurückgeschrieben werden kann.

Es kann vorgesehen sein, dass dann, wenn die drahtlose oder kabelgebundene Datenverbindung zwischen dem Kraftschrauber und dem externen Bedienteil aktiv ist, während eines Anzugsvorgangs Simultandaten (aktuelle Messwerte, Protokollierungsdaten, Fehlermeldungen, Daten zum aktuellen Gerätestatus) vom Kraftschrauber an das externe Bedienteil übertragen und insbesondere aktuelle Messwerte, Statusdaten und Fehlermeldungen dort auch über das Hauptdisplay angezeigt werden können. Um den Kraftschrauber auch mit Blick auf eine Protokollierung autark und unabhängig von dem Bestehen einer Datenverbindung von dem externen Bedienteil nutzen zu können, ist jedoch bevorzugt vorgesehen, dass insbesondere die für einen ordnungsgemäße Protokollierung eines Schraubfalls erforderlichen Protokollierungsdaten zunächst in einer am Kraftschrauber vorgesehenen Speichereinheit abgelegt werden und erst nach Abschließen des Schraubfalls eine Datenverbindung zwischen Kraftschrauber und externem Bedienteil hergestellt wird und die Daten mittels des externen Bedienteils über die Datenverbindung ausgelesen werden.

Das externe Bedienteil ist bevorzugt derart eingerichtet, dass es über eine drahtlose Datenverbindung oder drahtgebunden über geeignete Schnittstellen mit einem Computer verbunden werden kann, um zum Beispiel mittels des Computers mit Konfigurationsdaten, insbesondere komplexerer Schraubfälle bedatet werden zu können. Auch können im Bedienteil hinterlegte Protokollierungsdaten mittels einer solchen Datenverbindung ausgelesen oder die im Bedienteil hinterlegte Protokollierungsarchitektur im Computer angepasst werden. So ist gewährleistet, dass komplexere Eingaben und Programmierungen, die wegen der Größe und eingeschränkten Bedienbarkeit des bevorzugt klein und handlich gehaltenden externen Bedienteils über dieses nur schwierig vorzunehmen sind, komfortabel an einem Computer vorgenommen werden können.

Zur weiteren Unterstützung des Benutzers können am Kraftschrauber neben dem Hilfsdisplay eine oder mehrere optische Anzeigen vorgesehen sein, anhand derer der Benutzer beispielsweise über den aktuellen Kommunikationsstatus, den Programmierstatus oder den Prozessstatus informiert wird. Derartige optische Anzeigen können beispielsweise von LED-Lampen gebildet sein, aus deren permanenten oder intermittierenden Aufleuchten und/oder deren Farbe der Benutzer Rückschlüsse auf aktuelle Zustände des Werkzeugsystems schließen kann.

In einer bevorzugten Ausführungsform ist das externe Bedienteil ein Smartphone oder ein Tablet-Computer, das bzw. der sich mit dem Kraftschrauber drahtlos oder mittels eines Kabels zu verbinden vermag und auf dem eine Anwendung programmiert ist, so dass über das Smartphone oder den Tablet-Computer die Bedatungs- und Auslesevorgänge, wie vorstehend beschrieben, durchgeführt werden können. In diesem Zusammenhang sei angemerkt, dass etwaige an der Eingabeeinheit des externen Bedienteils vorgesehene Eingabetasten selbstverständlich auch Teil eines berührungsempfindlichen Bildschirms sein können.

Die Datenverbindung zwischen Kraftschrauber und externem Bedienteil ist bevorzugt als drahtlose Datenverbindung ausgestaltet. Der Kraftschrauber und das externe Bedienteil verfügen zu diesem Zweck über Sende- und Empfangseinrichtungen, die eine derartige drahtlose Datenverbindung ermöglichen. Gleichwohl ist es selbstverständlich auch möglich, die Datenverbindung zwischen Kraftschrauber und externem Bedienteil kabelgebunden auszuführen. In diesem Fall sind an Kraftschrauber und externem Bedienteil Schnittstellen zur Herstellung einer kabelgebundenen Datenverbindung zwischen Kraftschrauber und externem Bedienteil vorgesehen.

Nachfolgend wird ein weiterer Aspekt eines fremdkraftbetriebenen und handgehaltenen Kraftschraubers beschrieben, der in Kombination mit der vorstehend beschriebenen Erfindung, insbesondere also im Zusammenhang mit einem ein externes Bedienteil und einen Kraftschrauber umfassenden Werkzeugsystem, oder aber auch losgelöst hiervon, insbesondere also auch ohne ein externes Bedienteil, zum Einsatz kommen kann.

Der fremdkraftbetriebene Kraftschrauber zur Vornahme eines elektronisch gesteuerten Anzugsvorgangs einer hochfesten Schraubenverbindung oder zur Vornahme einer Serie derartiger Anzugsvorgänge weist, wie der zuvor beschriebene Kraftschrauber, neben einer fremdkraftbetriebenen Antriebseinheit auch eine elektronische Kraftschrauber-Steuereinrichtung zur Steuerung des Anzugsvorgangs nach vorgegebenen, den Schraubfall charakterisierenden Konfigurationsdaten auf.

Nach Fertigstellung eines Anzugsvorgangs kann es vorkommen, dass sich der Kraftschrauber wegen der hohen aufzubringenden Drehmomente (bei Akku-Kraftschraubern etwa 150 Nm bis 15.000 Nm) nach einem Schraubenanzugsvorgang infolge hoher Torsionsspannungen an der die Schraubenverbindung aufweisenden Baugruppe verkantet. Der Benutzer kann den Kraftschrauber dann unter Umständen von der Baugruppe nicht oder nur mit großen Mühen wieder abnehmen, so dass der Benutzer in der Regel eine am Kraftschrauber vorgesehene Drehrichtungsumkehr einstellt und den Kraftschrauber anschließend kurz in die Löserichtung der Schraubenverbindung drehend betätigt, um eine aufgetretene Verkantung des Kraftschraubers an der Baugruppe wieder zu lösen. Dieser Vorgang des Freidrehens kann zeit- und arbeitsaufwendig sein, insbesondere wenn eine große Anzahl von Schraubenanzugsvorgängen nacheinander durchzuführen sind und der Benutzer vor jedem Freidrehen zunächst dadurch, dass er den Kraftschrauber nicht von der Baugruppe abnehmen kann, überhaupt erst feststellt, dass der Kraftschrauber überhaupt verkantet ist, dann die Drehrichtungsumkehr einstellt, den Freidreh-Vorgang durchführt und anschließend die Drehrichtungsumkehr für den folgenden Schraubanzugsvorgang erneut einstellt, um die vorherige Drehrichtungsumkehr wieder rückgängig zu machen.

Die Freidreh-Steuerung ist dazu eingerichtet, dass im Anschluss an die Abarbeitung eines Schraubenanzugsvorgangs (Drehen der Schraube bzw. Mutter in Anzugsrichtung) automatisiert einen Freidrehvorgang initiiert wird, der insbesondere eine oder mehrere aufeinanderfolgende kurze Betätigungen des Kraftschraubers in Löserichtung (der der Anzugsrichtung entgegengesetzten Richtung) oder auch eine schnelle Folge von Drehrichtungsumkehroperationen umfassen kann, infolge derer der Kraftschrauber in schneller Abfolge und sehr kleinen Winkelbewegungen in Löserichtung und wieder zurück bewegt wird. Der Freidrehvorgang bewirkt bevorzugt kein Rückdrehen der Schraube bzw. Mutter in Löserichtung, sondern kann bereits dann beendet sein, wenn mittels der elektronischen Kraftschrauber-Steuereinrichtung und/oder mittels einer Freidreh-Erkennung, die gesondert von der Kraftschrauber-Steuereinrichtung oder auch als Bestandteil der Kraftschrauber-Steuereinrichtung vorgesehen sein kann, erkannt wird, dass der Kraftschrauber nicht oder nicht mehr verkantet ist.

Kraftschrauber-Steuereinrichtung vorgesehen sein kann, erkannt wird, dass der Kraftschrauber nicht oder nicht mehr verkantet ist.

Ein Kraftschrauber mit einer derartigen Freidreh-Steuerung bzw. mit einer derartigen Freidreh-Erkennung wird als eigenständige und losgelöst von dem Vorsehen eines externen Bedienteils beanspruchbare Erfindung angesehen. Gleichwohl kann eine derartige Freidreh-Steuerung bzw. Freidreh-Erkennung auch Bestandteil des beschriebenen Werkzeugsystems sein. Im letzteren Fall kann die Anforderung an einen elektronisch gesteuerten Schraubenanzugsvorgang, dass nach Abschluss des eigentlichen Schraubenanzugsvorgang ein Freidrehvorgang initiiert werden soll, zu den den Schraubenfall charakterisierenden Konfigurationsdaten gehören, die mittels des externen Bedienteils über die Datenverbindung an den Kraftschrauber übertragen werden können. Es kann aber auch vorgesehen sein, dass allein dem Benutzer die Entscheidung überlassen ist, ob im Anschluss an einen Anzugsvorgang von der Kraftschrauber-Steuerung ein automatisierter Freidrehvorgang vorzunehmen ist. Hierzu kann am Kraftschrauber ein Wahlschalter vorgesehen sein, dessen Betätigung dazu führt, dass im Anschluss an einen Schraubenanzugsvorgang ein automatisierter Freidrehvorgang durchgeführt wird. Letzteres ist selbstverständlich unabhängig davon möglich, ob der Kraftschrauber Bestandteil eines ein externes Bedienteil umfassenden Werkzeugsystems ist oder nicht.

Die nachfolgende Beschreibung der Zeichnungen dient der Beschreibung bevorzugter Ausführungsformen der Erfindung.

In den Zeichnungen zeigen
- Fig. 1: ein Werkzeugsystem mit einem akkubetriebenen Kraftschrauber, einem vom Kraftschrauber unabhängigen externen Bedienteil und einem Akku-Ladegerät,
- Fig. 2: eine schematische Darstellung einer zwischen dem externen Bedienteil und dem Kraftschrauber sowie zwischen dem externen Bedienteil und einem Computer stattfinden drahtlosen Datenkommunikation,
- Fig. 3: eine erste alternative Ausgestaltung des in Figur 1 gezeigten Kraftschraubers, und
- Fig. 4: eine zweite alternative Ausgestaltung des in Figur 1 dargestellten Kraftschraubers.

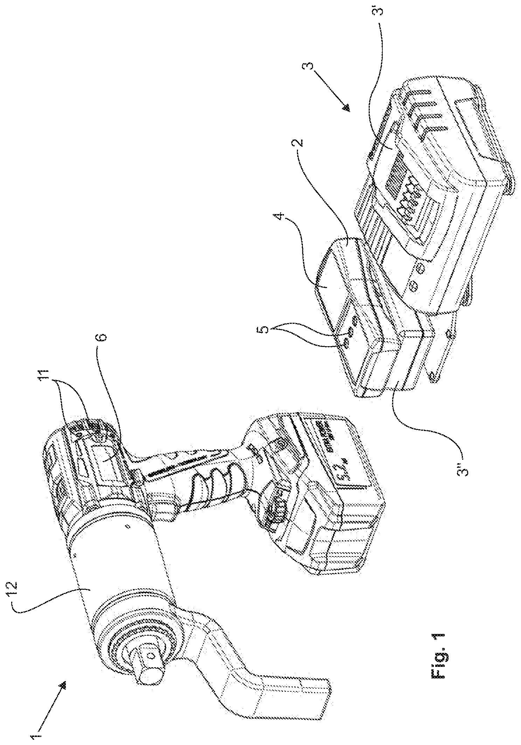

Figur 1 zeigt ein Werkzeugsystem zur Herstellung einer hochfesten Schraubenverbindung mit einem akkubetriebenen Kraftschrauber 1, einem vom Kraftschrauber 1 unabhängigen externen Bedienteil 2 und einem Akku-Ladegerät 3. Das Akkuladegerät weist eine Aufnahme 3' für einen für den Betrieb des Kraftschraubers bestimmten Akku, sowie eine Kopplungseinrichtung 3" zur Verbindung des externen Bedienteils 2 mit dem Akkuladegerät 3 für einen Aufladevorgang des Akkus des externen Bedienteils 2 auf.

Am externen Bedienteil 2 ist ein Hauptdisplay 4 sowie Eingabetasten 5 vorgesehen, die insbesondere zur Eingabe von einen Schraubfall betreffenden Konfigurationsdaten in das Bedienteil 2 oder zur Ausführung von etwaigen Befehlen wie beispielsweise der Initiierung einer Übertragung von Konfigurationsdaten zum Kraftschrauber 1 sowie zur Menüsteuerung bestimmt sind.

Am Kraftschrauber 1 ist ein Hilfsdisplay 6 vorgesehen, mittels dem insbesondere Konfigurationsdaten, die vor einem durchzuführenden Anzugsvorgang oder einer Serie von durchzuführenden Anzugsvorgängen in das externe Bedienteil 2 eingegeben und über die drahtlose Datenverbindung (anders als in den Figuren gezeigt kann auch eine kabelgebundene Datenverbindung eingesetzt werden) in eine Speichereinheit des Kraftschraubers geschrieben worden sind, oder sich aus derartigen Informationen ableitende Informationen, angezeigt werden können.

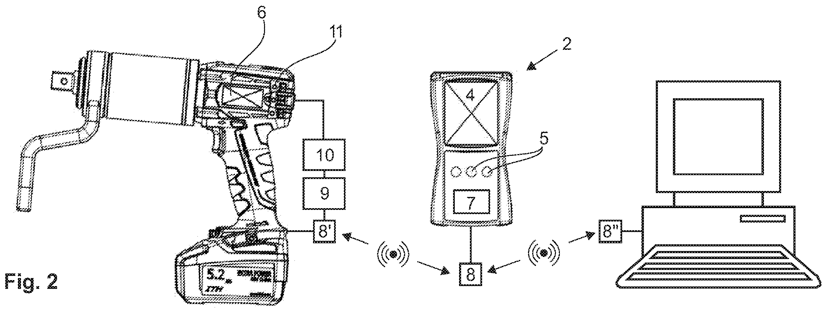

Figur 2 illustriert schematisch mithilfe einer Darstellung von am Datenaustausch zwischen Kraftschrauber 1 und externem Bedienteil 2 beteiligten Komponenten die beim Datenaustausch stattfindenden Vorgänge.

Über die Eingabetasten 5 am externen Bedienteil 2 werden vom Benutzer Konfigurationsdaten für einen abzuarbeitenden Schraubfall eingegeben, die in eine im Bedienteil 2 vorhandene Bedienteil-Speichereinheit 7 geschrieben werden. Mittels einer am Bedienteil 2 vorgesehenen Sende- und Empfangseinheit 8 werden die Konfigurationsdaten über eine drahtlose Datenverbindung an eine am Kraftschrauber 1 vorgesehene Sende- und Empfangseinheit 8' übertragen und dort in einer Kraftschrauber-Speichereinheit 9 abgelegt. Eine elektronische Steuereinrichtung 10 kann diese Konfigurationsdaten abrufen und aus diesen zusammen mit weiteren hinterlegten Daten die für den konfigurierten Schraubfall benötigten Steuerdaten und Steuerregeln berechnen.

Die Anzeige insbesondere der Konfigurationsdaten auf dem am Kraftschrauber angeordneten Hilfsdisplay 6 ermöglicht, dem Benutzer eine visuelle Rückmeldung über die Bedatung des Kraftschraubers und/oder die korrekte Durchführung eines Anzugsvorgangs oder einer Serie von Anzugsvorgängen zu geben, ohne dass der Benutzer auf das Display des externen Bedienteils angewiesen wäre.

Im Hauptdisplay 4 des externen Bedienteils 2 können neben Konfigurationsdaten wie Zielmoment, Zielwinkel, Schraubengröße und Materialqualität auch Informationen über den Prozessstatus oder etwaige Fehlermeldungen angezeigt werden. Neben derartigen Informationen sind natürlich auch Geräteeinstellungen des Bedienteils selbst, sowie solche des zugeordneten Kraftschraubers, darstellbar und gegebenenfalls über Eingaben veränderlich. Ebenfalls im Bedienteil hinterlegt ist ein Dokumentationssystem, in dem Daten eines Schraubfalls, die vom Kraftschrauber in dessen Speicher geschrieben und über das Bedienteil ausgelesen wurden, hinterlegt werden können.

Es kann auch vorgesehen sein, dass im Kraftschrauber erfasste Momentanmesswerte wie aktuelles Drehmoment, Schraubwinkel, Motorstrom, Drehzahl, Temperaturen, Akkuspannung bzw. -kapazität oder G-Sensor-Werte während eines laufenden Anzugsvorgangs und sofern eine Datenverbindung zwischen Kraftschrauber und externem Bedienteil aufgebaut ist, kontinuierlich vom Kraftschrauber übertragen und vom Bedienteil empfangen und angezeigt werden können.

Über eine am Kraftschrauber vorgesehene weitere optische Anzeigeeinrichtung in Form mehrerer LEDs können dem Benutzer weitere Rückmeldungen gegeben werden, wie etwa, dass aktuell eine Datenübertragung stattfindet oder dass das System einsatzbereit ist und keine Fehlermeldungen vorliegen.

Figur 2 zeigt neben der Möglichkeit einer drahtlosen Verbindung von Bedienteil 2 und Kraftschrauber 1 außerdem die Möglichkeit, dass das Bedienteil 2 über eine Datenverbindung, die drahtgebunden oder drahtlos sein kann, mit einem Computer über eine an diesem vorgesehene weitere Sende- und Empfangseinrichtung 8" verbunden werden kann, um die Konfiguration des Bedienteils 2 oder von dort hinterlegten Anwendungen, wie die eines Dokumentationssystems, über einen externen Computer durchführen zu können. Das externe Bedienteil 2 kann über den Computer ausgelesen werden, so dass die gewonnenen Daten auch einer komplexeren Weiterverarbeitung bzw. Auswertung, wie sie das kompakt und handlich gehaltene Bedienteil nicht ermöglichen würde, zuführen zu können.

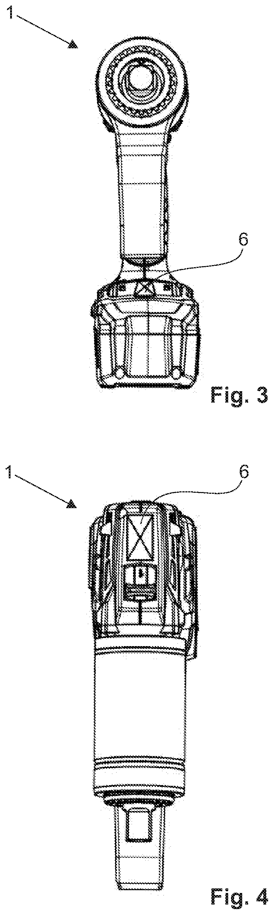

Figur 3 und Figur 4 verdeutlichen, dass das Hilfsdisplay 6 nicht wie in Figur 1 und Figur 2 gezeigt, notwendiger Weise seitlich und oberhalb eines Handgriffs am Kraftschrauber angeordnet werden muss, sondern dass die konstruktive Positionierung des Hilfsdisplays 6 weitgehend frei erfolgen kann. Während das Hilfsdisplay 6 in Figur 3 unterhalb des Handgriffs an einer nach oben weisenden Fläche einer den Akku aufnehmenden Handgrifferweiterung vorgesehen ist, ist das Hilfsdisplay 6 bei der in Figur 4 dargestellten Ausführungsform nach oben weisend oberhalb des Handgriffs angeordnet.

In den Figuren ist der fremdkraftbetriebene Kraftschrauber als über einen Akku elektrisch betriebener Kraftschrauber offenbart. Selbstverständlich kann die zur Herstellung der hochfesten Schraubenverbindung erforderliche Kraft auch über andersartige "Fremdkräfte" (nicht manuell vom Benutzer aufgebrachte Kraft) aufgebracht werden, sofern diese sich mittels einer elektronischen Kraftschrauber-Steuereinrichtung zur Steuerung des Anzugsvorgangs nach vorgegebenen, den Schraubfall charakterisierenden Konfigurationsdaten, steuern lässt. In Frage kommt hierbei insbesondere eine elektronisch gesteuerte Hydraulik.

### Bezuaszeichenliste

- 1: Kraftschrauber
- 2: externes Bedienteil
- 3: Akku-Ladegerät
- 3': Aufnahme für den Kraftschrauber-Akku
- 3": Aufnahme für das externe Bedienteil
- 4: Hauptdisplay
- 5: Eingabetasten
- 6: Hilfsdisplay
- 7: Bedienteil-Speichereinheit
- 8: Sende- und Empfangseinheit am Bedienteil
- 8': Sende- und Empfangseinheit am Kraftschrauber
- 8": Sende- und Empfangseinheit an einem Computer
- 9: Kraftschrauber-Speichereinheit
- 10: elektronische Steuereinrichtung
- 11: LED
- 12: Antriebseinheit

## Patentansprüche

1. Werkzeugsystem zur Vornahme eines elektronisch gesteuerten Anzugsvorgangs einer hochfesten Schraubenverbindung oder zur Vornahme einer Serie derartiger Anzugsvorgänge umfassend
- einen handgeführten, fremdkraftbetriebenen Kraftschrauber (1) mit einer Antriebseinheit (12) und einer elektronischen Kraftschrauber-Steuereinrichtung (10) zur Steuerung des Anzugsvorgangs nach vorgegebenen, den Schraubfall charakterisierenden Konfigurationsdaten, und
- ein vom Kraftschrauber (1) unabhängiges, handgehaltenes externes Bedienteil (2) mit einer Eingabeeinheit (5) zur Eingabe zumindest der Konfigurationsdaten sowie mit einem Display (4) zur visuellen Darstellung der Konfigurationsdaten oder sonstigen den Schraubfall oder einen Anzugsvorgang betreffenden Informationen und/oder Messwerten gegenüber dem Benutzer,
wobei der Kraftschrauber und das externe Bedienteil über eine Datenverbindung miteinander zu kommunizieren vermögen, und wobei zusätzlich zu dem am externen Bedienteil (2) vorgesehenen Display (4) am Kraftschrauber (1) ein Hilfsdisplay (6) vorgesehen ist, welches dem Benutzer den Schraubfall oder einen konkreten Anzugsvorgang betreffende Informationen unabhängig vom Display (4) des externen Bedienteils (2) anzuzeigen vermag, **dadurch gekennzeichnet, dass** das Werkzeugsystem derart eingerichtet ist, dass alle Konfigurationsdaten ausschließlich am externen Bedienteil (2) vorgenommen werden können, dass der Kraftschrauber (1) und das externe Bedienteil (2) akkubetrieben sind und das Werkzeugsystem ein Ackuladegerät (3) umfasst, an dem sich neben einem Akku des Kraftschraubers (1) auch das externe Bedienteil (2) aufladen lässt, und dass das Werkzeugsystem eine Freidreh-Steuerung umfasst.

2. Werkzeugsystem nach Anspruch 1, **dadurch gekennzeichnet, dass** die Steuerung und Überwachung eines Anzugsvorgangs ausschließlich über die am Kraftschrauber vorgesehene Kraftschrauber-Steuereinrichtung (10) erfolgt.

3. Werkzeugsystem nach einem der vorhergehenden Ansprüche, **dadurch gekennzeichnet, dass** die am Hilfsdisplay (6) anzeigbaren Informationen Konfigurationsdaten sind, die am externen Bedienteil (2) zuvor eingegeben und drahtlos an den Kraftschrauber (1) übertragen worden sind, oder aus diesen Konfigurationsdaten hergeleitete Informationen sind.

4. Werkzeugsystem nach einem der vorhergehenden Ansprüche, **dadurch gekennzeichnet, dass** am Kraftschrauber (1) eine digitale Speichereinheit (9) vorgesehen ist, in der die zur Steuerung des Kraftschraubers (1) herangezogene Konfigurationsdaten abgelegt sind und deren Inhalt mittels des externen Bedienteils (2) ausgelesen, am externen Bedienteil (2) geändert und in die digitale Speichereinheit (9) am Kraftschrauber (1) zurückgeschrieben werden kann.

5. Werkzeugsystem nach einem der vorhergehenden Ansprüche, **dadurch gekennzeichnet, dass** am Kraftschrauber (1) eine digitale Speichereinheit (9) vorgesehen ist, in der die einen Schraubfall betreffenden Protokollierungsdaten abgelegt werden, und dass das Werkzeugsystem derart eingerichtet ist, dass die Protokollierungsdaten erst nach Abschließen des Schraubfalls mittels des externen Bedienteils (2) ausgelesen werden.

6. Werkzeugsystem nach einem der vorhergehenden Ansprüche, **dadurch gekennzeichnet, dass** am externen Bedienteil (2) eine Schnittstelle zur Verbindung des Bedienteils (2) mit einem Computer vorgesehen ist.

7. Werkzeugsystem nach einem der vorhergehenden Ansprüche, **dadurch gekennzeichnet, dass** am Kraftschrauber (1) neben dem Hilfsdisplay (6) eine oder mehrere optische Anzeigen (11) vorgesehen sind.

8. Werkzeugsystem nach einem der vorhergehenden Ansprüche, **dadurch gekennzeichnet, dass** der Kraftschrauber (1) und das externe Bedienteil (2) über Sendeund Empfangseinrichtungen (8, 8') verfügen und die Datenverbindung eine drahtlose Datenverbindung ist.

9. Werkzeugsystem nach einem der vorhergehenden Ansprüche, **dadurch gekennzeichnet, dass** der Kraftschrauber (1) und das externe Bedienteil (2) Schnittstellen zur Herstellung einer kabelgebundenen Datenverbindung aufweisen.

## Claims

1. Tool system for carrying out an electronically controlled tightening process of a high-strength screw connection or for carrying out a series of such tightening processes, comprising
- a hand-guided, external-power-operated power wrench (1) having a drive unit (12) and an electronic power wrench control device (10) for controlling the tightening process according to predefined configuration data which characterizes the screwing operation, and
- a hand-held, external operator control part (2) which is independent of the power wrench (1) and has an input unit (5) for inputting at least the configuration data and has a display (4) for visually representing the configuration data or other information and/or measured values, relating to the screwing operation or a tightening process, to the user,
wherein the power wrench and the external operator control part can communicate with one another via a data connection, and wherein in addition to the display (4) which is provided at the external operator control part (2), an auxiliary display (6) is provided at the power wrench (1), which auxiliary display (6) can display to the user information relating to the screwing operation or a specific tightening process, independently of the display (4) of the external operator control part (2), **characterized in that** the tool system is configured in such a way that all the configuration data can be implemented exclusively at the external operator control part (2), that the power wrench (1) and the external operator control part (2) are battery operated, and the tool system comprises a battery charging device (3) at which, in addition to a battery of the power wrench (1), the external operator control part (2) can also be charged, and that the tool system comprises a free rotation control process.

2. Tool system according to Claim 1, **characterized in that** the control and monitoring of a tightening process takes place exclusively by means of the power wrench control device (10) which is provided at the power wrench.

3. Tool system according to one of the preceding claims, **characterized in that** the information which can be displayed on the auxiliary display (6) is configuration data which has been previously input at the external operator control part (2) and transmitted in a wireless fashion to the power wrench (1), or is information which is derived from this configuration data.

4. Tool system according to one of the preceding claims, **characterized in that** a digital memory unit (9) is provided at the power wrench (1), in which memory unit (9) the configuration data which is used to control the power wrench (1) is stored, and the content of which configuration data can be read out by means of the external operator control part (2), changed at the external operator control part (2) and written back into the digital memory unit (9) at the power wrench (1).

5. Tool system according to one of the preceding claims, **characterized in that** a digital memory unit (9) is provided at the power wrench (1), in which digital memory unit (9) the log data which relates to a screwing operation is stored, and **in that** the tool system is configured in such a way that the log data is not read out until after the conclusion of the screwing operation by means of the external operator control part (2).

6. Tool system according to one of the preceding claims, **characterized in that** an interface for connecting the operator control part (2) to a computer is provided at the external operator control part (2).

7. Tool system according to one of the preceding claims, **characterized in that** in addition to the auxiliary display (6) one or more visual displays (11) are provided at the power wrench (1).

8. Tool system according to one of the preceding claims, **characterized in that** the power wrench (1) and the external operator control part (2) have transmission and reception devices (8, 8'), and the data connection is a wireless data connection.

9. Tool system according to one of the preceding claims, **characterized in that** the power wrench (1) and the external operator control part (2) have interfaces for establishing a cable-bound data connection.

## Revendications

1. Système d'outillage permettant d'effectuer un processus de serrage à commande électronique d'un raccordement par vis à résistance élevée ou d'effectuer une série de ces processus de serrage, comprenant
- une visseuse manuelle (1) actionnée par une force extérieure, dotée d'une unité d'entraînement (12) et d'un dispositif de commande de visseuse électronique (10) destiné à commander le processus de serrage selon des données de configuration prédéfinies, caractérisant le type de vissage, et
- un élément de commande externe manuel (2), indépendant de la visseuse (1), comprenant une unité d'entrée (5) permettant d'entrer au moins les données de configuration, ainsi qu'un affichage (4) pour la représentation visuelle à l'intention de l'utilisateur des données de configuration ou d'autres informations et/ou valeurs de mesure concernant le type de vissage ou un processus de serrage,
la visseuse et l'élément de commande étant capables de communiquer mutuellement par une liaison de données, et dans lequel, en plus de l'affichage (4) prévu sur l'élément de commande externe (2), un affichage auxiliaire (6) est prévu sur la visseuse (1) qui peut afficher pour l'utilisateur des informations concernant le type de vissage ou un processus de serrage concret, indépendamment de l'affichage (4) de l'élément de commande externe (2),
**caractérisé en ce que** le système d'outillage est aménagé de telle sorte que toutes les données de configuration peuvent être effectuées uniquement sur l'élément de commande externe (2),
**en ce que** la visseuse (1) et l'élément de commande externe (2) fonctionnent sur accumulateur, et le système d'outillage comprend un chargeur d'accumulateur (3) qui permet de recharger en plus d'un accumulateur de la visseuse (1) aussi l'élément de commande externe (2), et **en ce que** le système d'outillage comprend une commande en rotation libre.

2. Système d'outillage selon la revendication 1, **caractérisé en ce que** la commande et la surveillance d'un processus de serrage ne sont effectuées que par l'intermédiaire du dispositif de commande de visseuse (10) prévu sur la visseuse.

3. Système d'outillage selon l'une quelconque des revendications précédentes, **caractérisé en ce que** des informations pouvant être affichées sur l'affichage auxiliaire (6) sont des données de configuration qui ont été entrées auparavant sur l'élément de commande externe (2) et ont été transmises sans fil à la visseuse (1) ou qui sont des informations dérivées de ces données de configuration.

4. Système d'outillage selon l'une quelconque des revendications précédentes, **caractérisé en ce que** sur la visseuse (1), une unité de mémoire numérique (9) est prévue dans laquelle sont stockées les données de configuration utilisées pour commander la visseuse (1) et dont le contenu peut être lu au moyen de l'élément de commande externe (2), modifié sur l'élément de commande externe (2) et réinscrit dans l'unité de mémoire numérique (9) sur la visseuse (1).

5. Système d'outillage selon l'une quelconque des revendications précédentes, **caractérisé en ce que** sur la visseuse (1), une unité de mémoire numérique (9) est prévue dans laquelle sont stockées les données d'enregistrement concernant un type de vissage, et **en ce que** le système d'outillage est aménagé de telle sorte que les données d'enregistrement ne sont lues au moyen de l'élément de commande externe (2) qu'après achèvement du type de vissage.

6. Système d'outillage selon l'une quelconque des revendications précédentes, **caractérisé en ce que** sur l'élément de commande externe (2), une interface est prévue pour relier l'élément de commande (2) à un ordinateur.

7. Système d'outillage selon l'une quelconque des revendications précédentes, **caractérisé en ce que** sur la visseuse (1), un ou plusieurs affichages optiques (11) sont prévus en plus de l'affichage auxiliaire (6).

8. Système d'outillage selon l'une quelconque des revendications précédentes, **caractérisé en ce que** la visseuse (1) et l'élément de commande externe (2) disposent de dispositifs d'émission et de réception (8, 8') et la liaison de données est une liaison de données sans fil.

9. Système d'outillage selon l'une quelconque des revendications précédentes, **caractérisé en ce que** la visseuse (1) et l'élément de commande externe (2) présentent des interfaces pour établir une liaison de données filaire.
